# EUROPÄISCHE PATENTSCHRIFT

(11) **EP 1 393 433 B1**
(45) Veröffentlichungstag und Bekanntmachung des Hinweises auf die Patenterteilung: **03.11.2010**
(21) Anmeldenummer: 02732713.9
(22) Anmeldetag: 14.05.2002
(51) Int. Cl.: H02P 7/28

(54) **VERFAHREN ZUM BESTIMMEN DER DREHSTELLUNG DER ANTRIEBSWELLE EINES KOMMUTIERTEN GLEICHSTROMMOTORS**
METHOD FOR DETERMINING THE ROTATING POSITION OF THE DRIVE SHAFT OF A COMMUTATED DIRECT CURRENT MOTOR
PROCEDE POUR DETERMINER LA POSITION DE ROTATION DE L'ARBRE DE TRANSMISSION D'UN MOTEUR A COURANT CONTINU COMMUTE

(30) Priorität: 21.05.2001 DE 10124614
(43) Veröffentlichungstag der Anmeldung: 03.03.2004
(73) Patentinhaber: Leopold Kostal GmbH & Co. KG, 58507 Lüdenscheid (DE)
(72) Erfinder: GERLACH, Tobias, 58119 Hagen (DE)
(86) Internationale Anmeldenummer: PCT/EP2002/005281
(87) Internationale Veröffentlichungsnummer: WO 2002/095925

(56) Entgegenhaltungen:
- DE-A- 4 311 182
- DE-A- 19 834 108
- DE-C- 19 729 238
- US-A- 5 311 771

## Beschreibung

Die Erfindung betrifft ein Verfahren zum Bestimmen der Drehstellung der Antriebswelle eines kommutierten Gleichstrommotors durch Auswerten der im Ankerstromsignal enthaltenen Stromrippel, bei welchem Verfahren eine Korrektur des Zählergebnisses der erfaßten Stromrippel bei Fehloder Doppelrippeln erfolgt.

Das Ankerstromsignal eines kommutierten Gleichstrommotors umfaßt einen Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker zehn Kollektorlamellen auf, sind im Ankerstromsignal entsprechend zehn Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vornehmen zu können.

Bei einem Betrieb eines Gleichstrommotors, insbesondere unter Last kann es jedoch vorkommen, daß die im Ankerstromsignal enthaltenen Stromrippel verzerrt auftreten, wobei sich eine solche Verzerrung durch zwei Stromspitzen bemerkbar macht. Diese werden als Doppelrippel bezeichnet. Im Zuge der Digitalisierung eines solchen Ankerstromsignales werden anstatt einer Stromspitze durch eine solche Verzerrung an dieser Position zwei Stromrippel als Stromrippelsignal aufgezeichnet. Eine Zählung dieser Doppelrippel führt jedoch zu einer fehlerhaften Positionsbestimmung des angetriebenen Elements. Entsprechendes gilt für das Ausbleiben eines als Fehlrippel bezeichneten Stromrippels bei tatsächlich bewegter Ankerwelle. Diese Fehler sind durch den Kommutator bedingt und somit nicht ohne weiteres durch eine Aufbereitung des Ankerstromsignales eliminierbar.

Aus DE 197 29 238 C1 ist eine Maßnahme bekanntgeworden, gemäß der das Ausbleiben eines erwarteten Stromrippels im Zählergebnis nur dann korrigiert wird, wenn der erwartete Stromrippel nicht innerhalb eines den erwarteten Zeitpunkt umgebenden Toleranzbereiches erkannt wird. Der Toleranzbereich ist fest vorgegeben. Bei dem aus diesem Dokument bekannten Verfahren wird somit der berechnete Zeitpunkt des wahrscheinlich nächsten Kommutierungszeitpunktes (Stromrippel) um die Größe des vorgegebenen Toleranzbereiches erweitert. Auf diese Weise werden im oder vor dem berechneten Zeitpunkt nicht aufgetretene Stromrippel nur dann als Fehlrippel erkannt, wenn auch innerhalb des Toleranzbereiches ein Stromrippel nicht detektiert worden ist. Mit diesem Verfahren ist eine zufriedenstellende Rippeldetektion bei einem stationären oder quasi stationären Betrieb des Gleichstrommotors möglich, bei der auch Fehl- oder Doppelrippel entsprechend korrigiert werden. Wird ein Stromrippel erst zeitlich nach der oberen Grenze des Toleranzbereiches detektiert, wird systemsseitig auf ein fehlerhaftes Ausbleiben eines Stromrippels geschlossen und entsprechend das Zählergebnis korrigiert. Bei einem Betrieb eines Gleichstromelektromotors können jedoch Betriebszustände eintreten, bei denen die Periodendauer einer Stromrippe sich quasi sprunghaft vergrößert. Ein solcher Betriebszustand tritt beispielsweise bei einem sprungartig gestiegenem Lastmoment auf, beispielsweise bei einem Betrieb des Elektromotors gegen einen Anschlag. Da bei einer solchen Situation der Stromrippel erst nach Ablauf des Toleranzbereiches detektiert wird, wird systemseitig fälschlicherweise eine Korrektur des Zählergebnisses durchgeführt. Folglich ist die Positionsbestimmung der Ankerwelle verfälscht. Bei einer Wiederholung derartiger Ereignisse, verfälscht sich das Zielergebnis zunehmend.

Aus DE 198 34 108 A1 ist ein Verfahren zur Bestimmung der Anzahl von Motorumdrehungen bei Elektromotoren aus Stromrippeln bekannt. Bei diesem Verfahren wird ein zeitliches Intervall bestimmt, innerhalb dessen der nächste Rippel erkannt werden soll. Die Länge dieses zu untersuchenden zeitlichen Intervalls wird dabei in Abhängigkeit von vorhergehenden, erkannten Rippeln bestimmt, z.B. indem der zeitliche Abstand der beiden zuletzt erkannten Rippel in die Berechnung des Intervalls mit eingeht. Beim Ausfall eines Rippels wird dadurch die Berechnung eines folgenden Intervalls aufgrund des fehlenden zeitlichen Abstands aber nicht mehr möglich bzw. wird mit zunehmender Anzahl von folgenden Fehlrippeln immer unpräziser, wenn dadurch auf den zeitlichen Abstand weiter vorhergehender Rippel zurückgegriffen werden muss.

Ausgehend von diesem diskutierten Stand der Technik liegt der Erfindung daher die Aufgabe zugrunde, ein eingangs genanntes gattungsgemäßes Verfahren dergestalt weiterzubilden, daß die zum vorbekannten Stand der Technik gezeigte Fehlinterpretation von Fehlrippeln vermieden, zumindest jedoch weitestgehend reduziert ist.

Diese Aufgabe wird erfindungsgemäß dadurch gelöst, daß nach der Detektion eines Stromrippels in einem Zeitpunkt in einem nachfolgenden Zeitpunkt oder in mehreren nachfolgenden Zeitpunkten, wobei das Zeitintervall zwischen jedem nachfolgenden Zeitpunkt und dem Zeitpunkt der vorangegangenen Detektion des Stromrippels kleiner ist als die Periode des Stromrippels, aus aktuellen Motorstrom- und Motorkenndaten der seit dem Zeitpunkt der Detektion des Stromrippels zurückgelegte Drehwinkel und daraus der erwartete Zeitpunkt der nächsten Stromrippeldetektion berechnet wird, und daß eine Korrektur des Stromrippelzählergebnisses bei nicht hinreichender Übereinstimmung zwischen dem aus der Berechnung erwarteten Zeitpunkt und dem Zeitpunkt der tatsächlichen Stromrippeldetektion erfolgt.

Bei dem erfindungsgemäßen Verfahren wird aus aktuellen Motorstromund Motorkenndaten in einem oder mehreren Zeitpunkten nach einer ersten Stromrippeldetektion und vor der Detektion eines weiteren Stromrippels der zwischenzeitlich zurückgelegte Drehwinkel zwischen dem Zeitpunkt der letzten Stromrippeldetektion und dem aktuellen Zeitpunkt berechnet. Da aus den Motorkenndaten der Winkelabstand zweier aufeinanderfolgender Stromrippel bekannt ist, kann aus dem aktuell berechneten und dem seit der letzten Stromrippeldetektion zurückgelegten Drehwinkel infolge der Kenntnis des dann noch benötigten Drehwinkelbetrages zur nächsten Stromrippeldetektion über Motorkenndaten, beispielsweise der Drehzahl oder der Winkelbeschleunigung der erwartete Zeitpunkt der nächsten Stromrippeldetektion bestimmt werden. Nur bei nicht hinreichender Übereinstimmung zwischen dem aus der Berechnung erwarteten Zeitpunkt und dem Zeitpunkt der tatsächlichen Stromrippeldetektion wird das Stromzählergebnis entsprechend korrigiert. Die Berechnung kann in jedem Zeitpunkt der digitalen Abtastung des analogen Ankerstromsignales vorgenommen werden. In die Berechnung gehen sodann regelmäßig die aktuellen Motorstromdaten ein, so daß sich zwischenzeitlich einstellende Änderungen des Betriebszustandes unmittelbar berücksichtigt werden und beispielsweise bei einem Betrieb des Gleichstrommotors gegen einen Anschlag, etwa eine Einklemmsituation bei einem Einsatz des Gleichstrommotors als Fensterhebermotor gleichfalls zu einer Verschiebung des erwarteten Zeitpunkts der nächsten Stromrippeldetektion führt. Durch das beanspruchte Verfahren erfolgt somit quasi eine Plausibilitätsprüfung der tatsächlich detektierten Stromrippel. Bei einem Fehlrippel liegt naturgemäß der aus der Berechnung erwartete Zeitpunkt der nächsten Stromrippeldetektion soweit von dem Zeitpunkt der tatsächlich nächsten Stromrippeldetektion entfernt, daß das Stromrippelzählergebnis entsprechend korrigiert wird. Entsprechendes gilt für das Auftreten von Doppelnrippeln.

Grundsätzlich braucht das beschriebene Verfahren nicht notwendigerweise mit einem Toleranzwert zu arbeiten, durch den innerhalb einer Stromrippelperiode auftretende Betriebszustandsänderungen kompensiert werden müßten, insbesondere dann nicht, wenn die Berechnung im Takte der digitalen Abtastung des analogen Ankerstromsignales erfolgt. Damit jedoch Betriebszustandsänderungen des Gleichstrommotors zwischen zwei Berechnungszeitpunkten nicht zu Fehlinterpretationen führen, wird man typischerweise den berechneten Zeitpunkt der erwarteten nächsten Stromrippeldetektion mit einem Toleranzbereich ausstatten, so daß dieser Zeitpunkt Teil eines Toleranzbereiches ist. Der Wert des Toleranzbereiches kann konstant sein. In einer Ausgestaltung ist jedoch vorgesehen, diesen Toleranzwert mit größer werdendem Zeitintervall vom Zeitpunkt der letzten Stromrippeldetektion kleiner werden zu lassen. Dies ist möglich, da mit jedem Zeitpunkt der Berechnung des erwarteten Zeitpunktes der nächsten Stromrippeldetektion innerhalb einer Periode der aktuelle Betriebszustand durch die Auswertung der Motorstromdaten berücksichtigt wird. Zur Reduzierung des Rechenaufwandes kann dabei vorgesehen sein, daß das gesamte Motormodell innerhalb eines vorgegebenen Zeitintervalles nur einmal vollständig berechnet wird und anschließend in die weitere Berechnung des erwarteten Zeitpunktes lediglich die Differenzwerte der Motorstromdaten eingehen. Das vollständige Motormodell kann beim Anlauf jedes Betriebes, bei jeder Umdrehung oder beispielsweise in jeder Stromrippelperiode berechnet werden.

Das Verfahren eignet sich grundsätzlich zur Positionsbestimmung der Ankerwelle während des gesamten Betriebes des Gleichstrommotors. Bei stationären oder quasi stationären Betriebszuständen des Gleichstrommotors wird jedoch diese Plausibilitätskontrolle in Echtzeit grundsätzlich nicht benötigt. Bei stationären oder quasi stationären Betriebszuständen können daher andere Verfahren mit einem geringeren Rechenaufwand eingesetzt werden, beispielsweise ein solches, bei dem die Berechnung des Zeitpunktes der nächsten erwarten Stromrippeldetektion mit einem dynamischen Toleranzwert erfolgt. Der Toleranzwert kann beispielsweise in Abhängigkeit von der Änderung des Ankerstromwertes jeweils angepaßt werden. Bei Überschreiten eines Stromänderungsbetrages wird dann von einem solchen weniger rechenintensiven Verfahren auf das beanspruchte Verfahren umgeschaltet, um in diesen für die exakte Stromrippelzählung eher kritischen Betriebszuständen eine Fehlinterpretation des detektierten Ankerstromsignales zu vermeiden.

Nachfolgend ist die Erfindung anhand eines Ausführungsbeispieles unter Bezugnahme auf die beigefügten Figuren beschrieben. Es zeigen:
- **Fig. 1:**: Ein Diagramm, darstellend das analoge Ankerstromsignal eines kommutierten Gleichstrommotors über einen Drehwin- kel von 360° und
- **Fig. 2:**: In einer vergrößerten Darstellung einen Stromrippel der Figur 1 mit weiteren Kenngrößen.

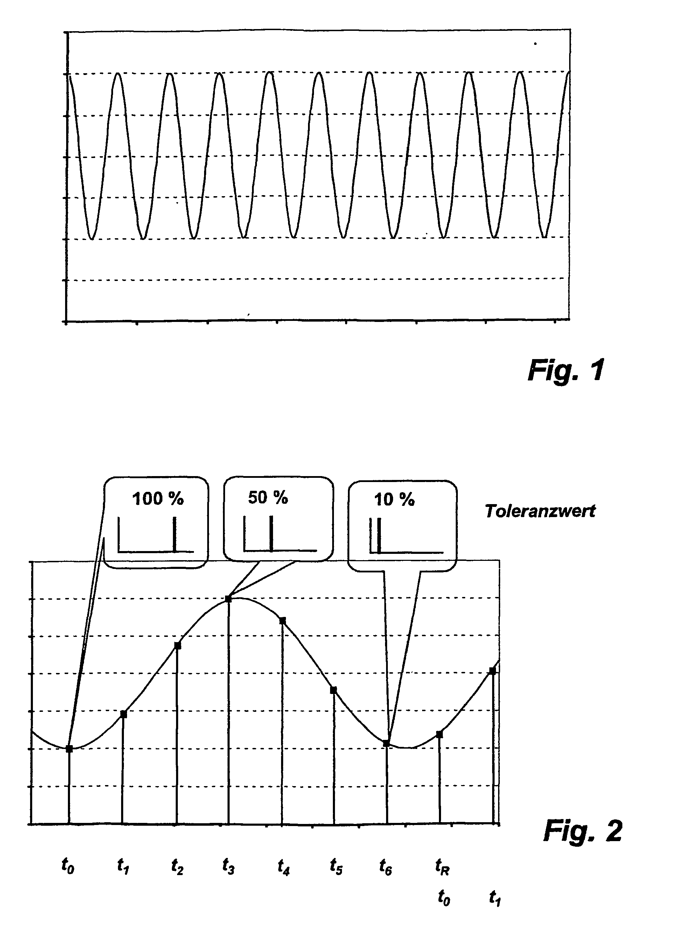

Das in Figur 1 gezeigte analoge Ankerstromsignal eines mit zehn Kollektorlamellen versehenen, kommutierten Gleichstrommotors ist aufgetragen über eine vollständige Umdrehung der Ankerwelle des Gleichstrommotors und somit über 360°. Innerhalb dieses Drehwinkelbetrages generiert der Gleichstrommotor zehn Stromrippel, so daß alle 36° ein Stromrippel bei ordnungsgemäßer Detektion detektiert werden kann.

Einer dieser zehn Stromrippel ist in Figur 2 vergrößert dargestellt. Eingezeichnet sind in Figur 2 ebenfalls mit gefüllten Kästchen die Zeitpunkte einer digitalen Abtastung des analogen Ankerstromsignales Bei dem dargestellten Ausführungsbeispiel erfolgt eine Stromrippeldetektion anhand einer Minima-Detektion. Beginnend in einem Zeitpunkt t₀, in dem ein tatsächlicher Stromrippel detektiert worden ist, wird nachfolgend im Takte der Abtastung des analogen Ankerstromsignals in den Zeitpunkten t_{1···6} der in diesem Zeitpunkt jeweils zurückgelegte Drehwinkel seit dem Zeitpunkt der letzten Stromrippeldetektion und daraus der erwartete Zeitpunkt der nächsten Stromrippeldetektion berechnet wird. Dies kann anhand der ebenfalls aus aktuellen Motorstromdaten bestimmten Drehzahl oder der Winkelbeschleunigung bestimmt werden. Mit zunehmend größer werdendem Zeitintervall zwischen den Berechnungszeitpunkten t₁...t₆ und dem berechneten erwarteten Zeitpunkt t_{R} der nächsten Stromrippeldetektion wird durch Einflußnahme der aktuellen Betriebszustände über die Motorstromdaten dieser Zeitpunkt t_{R} immer exakter vorhersagbar. Aus diesem Grunde sind bei dem dargestellten Ausführungsbeispiel die berechneten Zeitpunkte t_{R} der erwarteten nächsten Stromrippeldetektion mit einem zunehmend kleiner werdenden Toleranzbereich ausgestattet, der im Zeitpunkt t₀ und somit im Zeitpunkt der ersten Berechnung innerhalb der nächsten Stromrippelperiode am größten ist (hier: 100 %) und mit zunehmen größer werdenden Zeitintervall vom Zeitpunkt t₀ zu einem Berechnungszeitpunkt t₁...t₆ reduziert wird. Ein Toleranzwert von 10 % ist bei diesem Ausführungsbeispiel das Minimum. Diese drehwinkelbasierte Plausibilitätskontrolle einer Stromrippeldetektion wiederholt sich in jeder Stromrippelperiode entsprechend.

Bei einer Änderung des Betriebszustandes, beispielsweise bei einem Betrieb des Gleichstrommotors gegen einen Anschlag resultiert dies in einem Stromanstieg und zu einer Vergrößerung der Stromrippelperiode. Durch die mehrfache Berechnung des erwarteten Zeitpunktes t_{R} der nächsten Stromrippeldetektion innerhalb der Periode einer Stromrippel werden derartige Betriebszustandsänderungen unmittelbar erkannt, so daß der aus den Motorstromdaten berechnete Zeitpunkt t_{R} der nächsten erwarteten Stromrippeldetektion quasi in Echtzeit entsprechend angepaßt und verschoben wird. Das Ausbleiben einer tatsächlichen Stromrippeldetektion in dem ursprünglich im Zeitpunkt t₀ berechneten erwarteten Zeitpunkt kann daher nicht als Fehlrippel - wie beim vorbekannten Stand der Technik - interpretiert werden.

## Patentansprüche

1. Verfahren zum Bestimmen der Drehstellung der Antriebswelle eines kommutierten Gleichstrommotors durch Auswerten der im Ankerstromsignal enthaltenen Stromrippel, bei welchem Verfahren eine Korrektur des Zählergebnisses der erfaßten Stromrippel bei Fehloder Doppelrippeln erfolgt, **dadurch gekennzeichnet, daß** nach der Detektion eines Stromrippels in einem Zeitpunkt (t₀) in einem nachfolgenden Zeitpunkt oder in mehreren nachfolgenden Zeitpunkten (t_{1...n}), wobei das Zeitintervall zwischen jedem nachfolgenden Zeitpunkt (t_{1...n}) und dem Zeitpunkt (t₀) der vorangegangenen Detektion des Stromrippels kleiner ist als die Periode des Stromrippels, aus aktuellen Motorstrom- und Motorkenndaten der seit dem Zeitpunkt (t₀) der Detektion des Stromrippels zurückgelegte Drehwinkel und daraus der erwartete Zeitpunkt (t_{R}) der nächsten Stromrippeldetektion berechnet wird, und daß eine Korrektur des Stromrippeizähiergebnisses bei nicht hinreichender Übereinstimmung zwischen dem aus der Berechnung erwarteten Zeitpunkt (t_{R}) und dem Zeitpunkt der tatsächlichen Stromrippeldetektion erfolgt.

2. Verfahren nach Anspruch 1, **dadurch gekennzeichnet, daß** die Zeitpunkte der digitalen Abtastung des Ankerstromsignales des Gleichstrommotors den dem Zeitpunkt (t₀) einer Stromrippeldetektion nachfolgenden Zeitpunkten (t_{1...n}) zur Berechnung des zurückgelegten Drehwinkels und des erwarteten Zeitpunktes der nächsten Stromrippeldetektion entsprechen.

3. Verfahren nach Anspruch 1 oder 2, **dadurch gekennzeichnet, daß** der berechnete Zeitpunkt der nächsten erwarteten Stromrippeldetektion Teil eines diesen Zeitpunkt enthaltenen Toleranzbereiches ist.

4. Verfahren nach Anspruch 3, **dadurch gekennzeichnet, daß** mit zunehmend größer werdendem Zeitintervall zwischen dem Zeitpunkt (t_{1...n}) der Berechnung und dem zurückliegenden Zeitpunkt (t₀) der letzten Stromrippeldetektion der Toleranzbereich des berechneten Zeitpunktes der nächsten erwarteten Stromrippeldetektion kleiner wird.

5. Verfahren nach einem der Ansprüche 1 bis 4, **dadurch gekennzeichnet, daß** dieses Verfahren bei einer Detektion von ein bestimmtes Maß übersteigenden Stromänderungen durchgeführt wird, während bei stationärem oder quasi stationärem Betrieb des Gleichstrommotors nach einer Detektion eines Stromrippels der Zeitpunkt der erwarteten nächsten Stromrippeldetektion berechnet wird, welcher berechnete Zeitpunkt in einem Toleranzbereich enthalten ist und die Größe des den Zeitpunkt einer erwarteten Stromrippeldetektion umgebenden Toleranzbereiches, in dem ein Korrektur des Zählergebnisses nicht erforderlich ist, dynamisch an sich ändernde Betriebszustände des Gleichstrommotors angepaßt wird.

6. Verfahren nach Anspruch 5, **dadurch gekennzeichnet, daß** der Toleranzbereich in Abhängigkeit von dem Maß einer Änderung des Mittelwertes des Ankerstromsignals eingestellt wird, wobei der Toleranzbereich bei steigendem Mittelwert vergrößert und bei fallendem Mittelwert verkleinert wird.

7. Verfahren nach Anspruch 6, **dadurch gekennzeichnet, daß** in die Mittelwertbetrachtung des Ankerstromsignals ein vom aktuellen Zeitpunkt zurückreichendes Zeitintervall konstanter Größe eingeht.

8. Verfahren nach Anspruch 6, **dadurch gekennzeichnet, daß** in die Mittelwertbetrachtung des Ankterstromsignals ein vom aktuellen Zeitpunkt zurückreichendes Zeitintervall adaptiver Größe in Abhängigkeit von dem Betriebszustand des Gleichstrommotors eingeht.

9. Verfahren nach Anspruch 7 oder 8, **dadurch gekennzeichnet, daß** eine Anpassung der Größe des Toleranzbereiches schrittweise erfolgt.

## Claims

1. Process for determining the rotational position of the drive shaft of a commutated direct current motor by evaluating the current ripple incorporated in the armature current signal, in the course of which process a correction of the counting result of the detected current ripple occurs in the event of faulty or double ripples, **characterised in that** upon detection of a current ripple at one point of time (t₀), at a successive point of time or at several successive points of time (t_{1...n}), the time interval between each successive point of time (t_{1...n}) and the point of time (t₀) of the preceding detection of the current ripple being smaller than the period of the current ripple, the angle of rotation passed through since the point of time (t₀) of detecting the current ripple is calculated from the latest motor current and motor characteristics and on this basis the anticipated point of time (t_{R}) of the next detection of a current ripple, and that a correction of the counting result of the current ripple occurs in the event that there is not adequate congruence between the point of time (t_{R}) anticipated on the basis of the calculation and the point of time of the detection of the actual current ripple.

2. Process in accordance with Claim 1, **characterised in that** the points of time of the digital sampling of the armature current signal of the direct current motor correspond to the points of time (t_{1···n}) subsequent to the point of time (t₀) of detecting a current ripple for the purpose of calculating the angle of rotation passed through and the anticipated point of time of the next detection of a current ripple.

3. Process in accordance with Claims 1 and 2, **characterised in that** the calculated point of time of the next anticipated current ripple detection is part of a tolerance range comprised in this point of time.

4. Process in accordance with Claim 3, **characterised in that** the greater the time interval between the point of time (t_{1···n}) of the calculation and the preceding point of time (t₀) of the last current ripple detection, the smaller the tolerance range of the calculated point of time of the next anticipated current ripple detection becomes.

5. Process in accordance with any of Claims 1 to 4, **characterised in that** this process is carried out upon detection of current changes exceeding a certain degree whereas, in the case of stationary or virtually stationary operation of the direct current motor, upon detecting a current ripple the point of time of the anticipated next current ripple detection is calculated, the said calculated point of time being incorporated in a tolerance range and the dimension of the tolerance range encompassing the point of time of an anticipated detection of a current ripple in which a correction of the counting result is not required being dynamically adapted to the changing operating states of the direct current motor.

6. Process in accordance with Claim 5, **characterised in that** the tolerance range is set in dependence on the dimension of a change in the mean value of the armature current signal, with the tolerance range being increased when the mean value rises and decreased when the mean value falls.

7. Process in accordance with Claim 6, **characterised in that** a time interval of a constant size going back from the current point of time is incorporated in the contemplation of the mean value of the armature current signal.

8. Process in accordance with Claim 6, **characterised in that** a time interval going back from the current point of time and being of an adaptive size in dependence on the operating state of the direct current motor is incorporated in the contemplation of the mean value of the armature current signal.

9. Process in accordance with Claim 7 or Claim 8, **characterised in that** an adaptation of the dimension of the tolerance range takes place incrementally.

## Revendications

1. Procédé pour déterminer, par l'évaluation des ondulations de courant, qui sont contenues dans le signal de courant d'induit, la position de rotation de l'arbre de commande d'un moteur à courant continu commuté, procédé dans lequel, une correction du résultat du comptage des ondulations de courant détectées est effectuée lors d'ondulations incorrectes ou doubles, **caractérisé en ce que**, après la détection d'une ondulation de courant dans un instant (tₒ), dans un instant suivant ou dans plusieurs instants suivants (t_{1...n)}), l'intervalle de temps entre chaque instant suivant (t_{1...n})) et l'instant (tₒ) de la détection précédente de l'ondulation de courant étant inférieur à la période de l'ondulation de courant, l'angle de rotation parcouru depuis l'instant (tₒ) de la détection de l'ondulation de courant est calculé sur la base des données caractéristiques actuelles du courant du moteur et du moteur, et l'instant (t_{R}) de la détection d'ondulation de courant suivante attendu est calculé sur cette base, et **en ce qu'**une correction du résultat du comptage d'ondulations de courant est effectuée en cas de concordance insuffisante entre l'instant (t_{R}) attendu sur la base du comptage et l'instant de la détection réelle d'une ondulation de courant.

2. Procédé selon la revendication 1, **caractérisé en ce que** les instants de l'échantillonnage numérique du signal de courant d'induit du moteur à courant continu correspondent aux instants (t_{1...n)}), faisant suite à l'instant (tₒ) d'une détection d'ondulation de courant pour le calcul de l'angle de rotation parcouru et de l'instant attendu de la détection d'une ondulation de courant suivante.

3. Procédé selon revendication 1 ou 2, **caractérisé en ce que** l'instant calculé de la détection d'ondulation de courant suivante, attendue fait partie d'une plage de tolérance contenant cet instant.

4. Procédé selon la revendication 3, **caractérisé en ce que**, lors d'un accroissement progressif de l'intervalle de temps entre l'instant du calcul (t_{1...n)}) et le précédent instant (tₒ) de la dernière détection d'ondulation de courant, la plage de tolérance de l'instant calculé de la détection d'ondulation de courant suivante, attendue diminue.

5. Procédé selon l'une des revendications 1 à 4, **caractérisé en ce que** ce procédé est effectué lors de la détection d'une variation du courant, qui dépasse une mesure définie, tandis que, lors du fonctionnement stationnaire ou quasi-stationnaire du moteur à courant continu, après une détection d'une ondulation de courant, l'instant de la prochaine détection d'ondulation de courant attendu est calculé, ledit instant calculé étant compris dans une plage de tolérance, et la grandeur de la plage de tolérance s'étendant de part et d'autre de l'instant d'une détection d'ondulation de courant attendue, plage dans laquelle une correction du résultat du comptage n'est pas nécessaire, est adaptée dynamiquement aux conditions de fonctionnement du moteur à courant se modifiant.

6. Procédé selon la revendication 5, **caractérisé en ce que** la plage de tolérance est réglée en fonction de la proportion d'une modification de la valeur moyenne du signal de courant d'induit, la plage de tolérance augmentant lors d'une valeur moyenne croissante et diminuant lors d'une valeur moyenne décroissante.

7. Procédé selon la revendication 6, **caractérisé en ce qu'**un intervalle de temps de grandeur constante, remontant au moment actuel, est pris en compte dans la considération de la valeur moyenne du signal de courant d'induit.

8. Procédé selon la revendication 6, **caractérisé en ce qu'**un intervalle de temps de grandeur adaptive, remontant au moment actuel, est pris en compte dans la considération de la valeur moyenne du signal de courant d'induit, en fonction de l'état de fonctionnement du moteur à courant continu.

9. Procédé selon revendication 7 ou 8, **caractérisé en ce qu'**une adaptation de la grandeur de la plage de tolérance est effectuée pas à pas.
